(19) Europäisches Patentamt
European Patent Office
Office européen des brevets

(11) **EP 2 200 268 B1**

(12) **EUROPEAN PATENT SPECIFICATION**

(45) Date of publication and mention
of the grant of the patent:
**08.02.2012 Bulletin 2012/06**

(51) Int Cl.:
*H04N 1/60* (2006.01)   *G09G 5/02* (2006.01)
*H04N 9/67* (2006.01)   *H04N 9/69* (2006.01)
*H04N 9/73* (2006.01)

(21) Application number: **08305993.1**

(22) Date of filing: **22.12.2008**

(54) **Method of calibration of a target color reproduction device**

Verfahren zur Kalibrierung einer Ziel-Farbwiedergabevorrichtung

Procédé d'étalonnage d'un dispositif cible de reproduction couleur

(84) Designated Contracting States:
**DE FR GB**

(43) Date of publication of application:
**23.06.2010 Bulletin 2010/25**

(73) Proprietor: **Thomson Licensing**
**92130 Issy-les-Moulineaux (FR)**

(72) Inventors:
• **Blonde, Laurent**
**35440 Montreuil sur Ille (FR)**
• **Stauder, Jürgen**
**35440 Montreuil sur Ille (FR)**

• **Doser, Ingo, Tobias**
**78050 Villingen-Schwenningen (DE)**

(74) Representative: **Ruellan-Lemonnier, Brigitte**
**Technicolor**
**1-5 rue Jeanne d'Arc**
**92130 Issy-les-Moulineaux (FR)**

(56) References cited:
**EP-A- 1 239 668       EP-A- 1 578 140**
**WO-A-2007/078563    WO-A-2008/073500**
**US-A1- 2005 134 801**

**Description**

The invention relates to the calibration of a color reproduction device, such as a color image display device or a color image printing device.

Source images to reproduce are generally distributed each over a matrix of pixels, each pixel being represented by a color value, such as an R,G,B triplet. In summary, source images are represented by source colors that are delivered or transmitted to a color reproduction device for the reproduction of these images. A color includes aspects such as hue, saturation and intensity. When colors are given in a device-dependent color space, as in the linear RGB color space, these colors are considered as device-dependent. When colors are given in a device-independent color space, as in the linear XYZ color space, or as in the non-linear color space LAB, these colors are considered as device-independent.

When source colors representing source images to reproduce are expressed in a device-dependent source color space, and when a given target color reproduction device having its own target color space is intended to be used to reproduce these images, the problem is to transform the source colors that are expressed in the device-dependent source color space into calibrated colors expressed in the device-dependent target color space.

The invention addresses the problem of finding the best way for this transformation, when a set of so-called reference reproduction forward transforms is available, each adapted to transform source colors expressed in the source color space into colors expressed in a device-independent color space. Each reference reproduction forward transform may correspond to a given reference color reproduction device. Even if the target color reproduction device is different from any of these reference color reproduction devices, the problem which the invention addresses is to find the best reference reproduction forward transform to use to get calibrated colors expressed in the device-dependent target color space. This problem is even more important if at least one reference reproduction forward transform does not correspond to a given reference color reproduction device but to a virtual reference color reproduction device. Such a virtual reference color reproduction device may not exists as physical device and can be a tool used during artistic transformation of images in an image production workflow. For example, the content creator may choose in a post-production workflow a reference reproduction forward transform corresponding to an imaginative virtual reference color reproduction device with preferred warm colors such as not existing in physical form. It may be that the content creator simulates such a virtual device on an existing physical device.

In a classical imaging chain from content creation via postproduction and distribution to final reproduction by a target reproduction device, the extent of reproducible colors is finally limited by the type of technology used for the target reproduction device. This extent of reproducible colors is called the target reproduction gamut. At the opposite end of the chain, when color content - such as motion pictures, video broadcast content or digital photography - is created, colors are kept inside a source gamut. The source gamut may be defined by the content creator.

Recent technology trends such as LCD display devices with LED backlight and multi-primary micro-display projectors come with Wide Color Gamuts (WCG) that are significantly larger than color gamuts achieved with older display devices such as CRTs. The usable color gamut and the color encoding is defined for instance in the ITU-R BT. 709 standard. Industrial practice deviates somehow from this standard, which is described for example by the EBU in their document "User requirements for Video Monitors in Television".

Three basic conditions need generally to be satisfied in order to reproduce colors from image content correctly on a target reproduction device:

-    1. Color encoding condition: the encoding of colors of the image content has to be correctly understood by the target color reproduction device.
-    2. Color gamut condition: Differences between the source gamut of the image content and the gamut of the target color reproduction device have to be identified and processed in a controlled manner.
-    3. Color appearance condition: Differences between viewing conditions of the target color reproduction device and viewing conditions of the source images have to be compensated for.

In traditional television, conditions 1 and 2 above are generally covered by simply controlling the three display primaries with the three RGB signals. If the primaries are not compatible with the ITU-R BT.709 standard, the condition 1 (color encoding condition) is violated. In this case, assuming linear signals, a 3x3 conversion matrix can compensate for primary color differences. Unfortunately, this does not satisfy the condition 2 (color gamut condition). Concerning condition 3, differences in viewing conditions (color appearance condition) are often compensated by application of an electro-optic transfer function ("display gamma") different from the color encoding defined in ITU-R BT.709, for example an end-to-end gamma of 1.25 for dim viewing conditions. In practice, existing television systems do not have the colorimetric accuracy, nor do they correctly accommodate for changes in viewing environment, to ensure correct reproduction of colors. Furthermore, display manufacturers use modifications of display colorimetry as a means of product differentiation, in order to create advantage over competitors, however, willingly sacrificing authentic color reproduction. Additionally, the consumer is given the possibility to modify himself brightness, contrast and saturation settings of the display by his own. He may thus manually compensate for viewing conditions or just satisfy personal preferences. These uncontrolled color alterations can create problems for viewing high-end motion picture content. A motion picture is an artwork that causes emotions and feelings by means of color composition and dramaturgy. If colors are not reproduced as intended, this artwork can be destroyed, with effects on consumer satisfaction. Out of this reason, in cinematographic creation and post-production, much effort is spent on tools and technologies for providing an accurate color rendition.

New technologies such as WCG brings a large variety of display devices on the market having notably different color gamuts and different color encoding characteristics. When content creators want to consider a variety of reference color reproduction devices, they will have to create different content versions having each different color gamut and color encoding. Each content version can be generated by transforming source colors representing images to display using a reference device forward transform characterizing a reference color reproduction device. Since reference reproduction forward transform defines how device independent colors are coded, it includes information on color gamut and contrast ratio. Such an information may be part of the creative effect chosen by the director of photography. Therefore, each reference reproduction forward transform may also contain such creative effect attached to its reference reproduction device.

The problem is that content creators cannot create content versions for all kind of color reproduction devices for reason of limited cost and time. If they create a limited number of versions for a limited set of reference reproduction forward transforms, the problem is how does a given target display device decide which would be the best reference reproduction forward transform to use to reproduce correctly source colors representing source images.

The document EP0606781 discloses a method to select one of a plurality of color reproduction methods, depending on source colors to be handled by a target reproduction device.

The document US6850245 discloses (see claim 13) a display characteristics recognition apparatus comprising: a profile storage unit storing various sorts of profiles each representative of characteristics as to display of an image by a display unit including data indicative of various display characteristics in a common format; and a profile selection unit selecting one profile from among the various sorts of profiles stored in said profile storage unit in accordance with the display characteristics determined by a display characteristics identification unit.

One drawback of the methods that are disclosed in these documents to choose the best reference display forward transform to use in order to display correctly source colors with a given target display device is they do not consider neither compensate for reproduction errors that may be linked to one of the reproduction forward transforms or to the combination of one of the reproduction forward transforms with any transform linked to the given target display device. In some cases, the inverse of transforms may be used. Furthermore, if a transform is not lossless, an inverse transform is not existing and a pseudo inverse transform has to be used instead. In the following, pseudo inverse transforms are called inverse transforms, too. One useful inverse transform may the inverse of the forward reproduction transform. One origin of reproduction errors is errors or information loss in transforms or inverse transforms.

Some color reproduction processes use approaches known as color management systems (CMSs) to characterize various target color reproduction devices and to transform source color data of images to reproduce into target color data that are able to control a given target color reproduction device in order to reproduce correctly the colors. Characterizing a color reproduction device typically involves calculating color response functions using color coordinate systems known as color spaces. One commonly-used color space is Commission Internationale de l'Éclairage (CIE) L*a*b* (CIELAB) space. CMSs attempt to reproduce an original color image on a color reproduction device so as to preserve the appearance of colors between the original image and the reproduction within the limitations of the target color reproduction device. Various CMS approaches have been proposed to achieve accurate color reproduction. Many of these approaches involve producing color samples outputted by the color reproduction device to characterize and measuring the color values of the samples using a color capture device that is calibrated. Such approaches correlate the outputted colors with the measured color values. This correlation is performed using, for example, forward and inverse transforms between device-specific color spaces and a device-independent color space. These transformation techniques are often supplemented by interpolation between entries in a multidimensional lookup table. A drawback of these techniques is that they exhibit inaccurate color conversion between similar reproduction devices, potentially resulting in undesirable contamination of colors. Furthermore, accurate color conversion of dark colors has often been particularly difficult. Moreover, CMSs often perform gamut mapping to correlate the gamut of colors that can be realized by a color reproduction device with regions of a color space. Because many color reproduction devices are incapable of realizing the complete range of colors in a color space, gamut mapping typically involves compressing or scaling regions of the color space. The color reproduction device can then approximate colors outside its gamut using the compressed regions of the color space. If gamut mapping includes compression, it causes enhanced quantization errors if quantized color values are used. Gamut mapping may include color clipping that generates information loss. For many CMSs, gamut mapping is potentially inconsistent under certain circumstances, such as when using transforms generated by software from different vendors. In addition, many CMSs exhibit inconsistencies when performing forward and inverse transformations between color reproduction devices. For example, color shifting, color clipping or color quantization often occurs with repeated or even unique forward and inverse transformations. Many CMS techniques exhibit other limitations in addition to the lack of accuracy in converting colors. For example, many CMS techniques are relatively inflexible with respect to changes in viewing conditions, gamut mapping, and choice of color space.

Assuming for instance that a set of test colors representative of the original images to reproduce is represented in a device-independent color space as the CIEXYZ, the target color reproduction device then would need to transform these test colors into device-dependent color values, for example RGB (red, green, blue), in order to control the reproduction device. This transform is called inverse reproduction transform. In this specific case, the following factors influence the reproduction quality:

- Out-of-gamut colors: Some of the transformed test colors may be outside the color gamut of the reproduction device. There are no device-dependent color values for those transformed test colors. The inverse reproduction transform is not defined for those transformed test colors. Usually, those transformed test colors need to be mapped into the color gamut of the reproduction device. This color mapping causes a reproduction error.
- Out-of-range colors: Some of the transformed test colors may be outside the dynamic range of the reproduction device. Their amplitude is ether to weak (too dark) or too intense (too bright), There are no device-dependent color values for those transformed test colors. The inverse reproduction transform is not defined for those transformed test colors. Usually, those transformed test colors need to be mapped into the dynamic range of the reproduction device. This tone mapping causes a reproduction error.
- Quantization: Device-dependent color values are quantized in current video systems. Quantization is a lossy operation with no existing inverse operation. For this reason, the inverse reproduction transform can not generally compensate for (or cannot invert) the quantization. Then, quantization will cause reproduction errors. Also device independent color values are often quantized when calculating on a computer the combination of an inverse and a forward or of a forward and an inverse transform.
- Noise: When the color reproduction device is controlled using device-dependent color values, its electronic and optical circuits will add noise to the signals representing these color values. This effect can not be inverted and considered in the inverse reproduction transform since the noise is stochastic and its instant realization is unknown. Noise will cause reproduction errors.
- Model errors: The inverse reproduction transform (or any other transform) is usually based on a more or less complicate mathematical model. This model may be simplified or simply not perfect with respect to the inverse color reproduction (or any color reproduction process) that is to be modeled. Furthermore, when building the inverse model from a model (for example for building the inverse transform from a forward transform or the forward transform from an inverse transform), the inverse model combined with the model often not give a neutral operation for reasons of simplicity, numerical precision or linearity of one or both models. These model errors will cause reproduction errors.

Moreover, all the above-mentioned error sources are not constant over all colors.

The invention addresses notably the problem of choosing the best reference reproduction forward transform to use to reproduce correctly source colors representing source images with a given target color reproduction device, by compensating for reproduction errors notably due to the above-mentioned factors.

For this purpose, the subject of the invention is a method to reproduce at least one source image represented by device-dependent source colors using :

- a target color reproduction device characterized :
- by its target reproduction forward transform, adapted to transform device-dependent colors into responsive device-independent colors for said target reproduction device, and/or
- by its target reproduction inverse transform, adapted to transform device-independent colors into device-dependent colors, wherein said device-independent colors are responsive to said device-dependent colors for said target reproduction device,
- a set of reference reproduction forward transforms, each adapted to transform device-dependent colors into corresponding device-independent colors,
  said method comprising the following steps :

1- selecting a set of device-dependent source test colors among said device-dependent source colors,
2- for each reference reproduction forward transform of the set:

2.1) transforming said set of device-dependent source test colors into a set of device-independent reference test colors, using said reference reproduction forward transform,
2.2) transforming said set of device-independent reference test colors into a set of device-dependent target test colors using either an inverse of said target reproduction forward transform, or said target reproduction inverse transform,

2.3) either transforming each set of device-dependent target test colors into a corresponding set of device-independent target test colors using said target reproduction forward transform, or controlling said target color reproduction device using said set of device-dependent target test colors in order to reproduce said set and measuring said set as reproduced to obtain a corresponding set of device-independent target test colors,

3- evaluating a difference between each set of device-independent reference test colors and the corresponding set of device-independent target test colors,

4- selecting the reference reproduction forward transform that has been used to obtain the set of device-independent reference test colors corresponding to the lowest of the evaluated differences,

5- transforming the device-dependent source colors into device-independent calibrated colors using said selected reference reproduction forward transform,

6- transforming said device-independent calibrated colors into device-dependent calibrated colors using either said inverse of said target reproduction forward transform, either said target reproduction inverse transform,

7- reproducing said at least one source image by controlling said target color reproduction device using said device-dependent calibrated colors.

Device-dependent source colors representing the at least one source image are expressed in a given source color space. Each reference reproduction forward transform is adapted to transform device-dependent colors into corresponding device-independent colors, wherein these device-dependent colors are expressed in the same color space as the device-dependent source colors representing the at least one source image.

Thanks to the invention, the best reference reproduction forward transform is easily chosen to reproduce correctly source colors representing source images with a given target reproduction device, and the above-quoted reproduction errors can be compensated.

Preferentially, said selection of device-dependent source test colors among said device-dependent source colors is adapted to get a set of device-dependent source test colors that are representative of said device-dependent source colors. Said selection may be for instance a regular DxDxD grid in the RGB source color space.

Preferentially, the method of reproduction uses also :

- a set of reference color reproduction devices, each characterized by a reference reproduction-device forward transform adapted to transform device-dependent colors into responsive device-independent colors for said reference reproduction device,
- attached to each reference reproduction device, a creative color transform adapted to transform device-dependent source colors into device-dependent intermediate colors such that, when said device-dependent intermediate colors are used to control said reference reproduction device, at least one of those colors is different in at least one of the following aspects: hue, saturation, luminance, color gamut or dynamic range,

and each reference reproduction forward transform of said set is defined by the concatenation of a reference reproduction-device forward transform characterizing a reference color reproduction device of said set and of a creative color transform of said set attached to said reference reproduction device.

Such creative color transforms may be compared to the color transforms operated by the « look » processor disclosed in the document EP1239668, under the reference 42 to apply a certain "look" to the signals. In the context of this disclosure, "creative" is meant to include without limitation the appearance produced by the tone scale and colorimetry of a standard digital image source, such as source imagery from a digital camera, computer generation or a motion picture print film, and the adjustments a director of photography would apply to a standard appearance to obtain a creative effect. For example, a creative transform may be adapted to generate an effect obtained by applying a skip bleach process to the source colors, doing print exposure flashing, offsetting the balance position, adding or recreating the tone scale and colorimetry of the source colors, or the like, wherein the source colors might be the tone scale and colorimetry generated by printing and projecting Kodak Vision Print Film 2383 TM. The creative color transforms attached to a reference color reproduction device allow different "looks" and creative effects to be imparted to the source colors of the source image to reproduce. The parameters defining these creative color transforms are either precalculated values, e.g., a set of LUT entries, or could be generated contemporaneously in response to a colorist's input.

The subject of the invention is also a system of reproduction of at least one image comprising :

- a calibration module adapted to implement the method of reproduction according to the invention, using said target color reproduction device, comprising a receiver that is adapted to receive said source colors representing the at least one image to reproduce with said set of reference reproduction forward transforms, and
- said target color reproduction device itself.

Advantageously, the same source images can be reproduced with different target display devices with only, compared to prior art, the little increase of transmission data rate that is required to transmit the set of reference reproduction forward transforms.

In summary, using a set of reference reproduction forward transforms that are transmitted to the target color reproduction device with the images to reproduce, the method according to the invention allows to select the best reproduction forward transform to calibrate the images before they are sent to the target color reproduction device for reproduction.

The invention will be more clearly understood on reading the description which follows, given by way of non-limiting example and with reference to the appended figures in which:

- Figure 1 illustrates the concatenation of the reference reproduction-device forward transforms characterizing the different reference color reproduction devices, with the different creative color transforms.
- Figure 2 illustrates schematically the main embodiment of the invention.

A non-limiting embodiment of the invention will now be described, which comprises the following steps :

- 1 - Definition of a set of reference display devices with its characterizing color transforms.
- 2 - Definition of creative color transforms.
- 3 - Concatenation of the reference display-device forward transforms with the creative color transforms to get a set of reference display forward transforms, i.e. "final" transforms.
- 4 - Definition of the target display device used to reproduce sources images.
- 5 - Selection of the best final color transform for calibration of this target display device : either:

    - 5.1 - 1st method of selection.
    - 5.2 - 2nd method of selection.

- 6 - Display of sources images by the target display device calibrated by the selected final color transform.

**1 - Definition of a set of reference display devices with its characterizing** color transforms.

A set of N reference display devices $\{D_n / n = 1...N\}$ of different types is defined, instead of just one CRT like reference display as it is the case in prior art classical post-production. The reference display devices are chosen in a way that they represent in some way the types of consumer display devices in use world-wide. Each reference display device $D_n$ is specified by a reference display forward transform $F_n$. Assuming a reference display device having an input video color signal with three color channels, red, green and blue (R,G,B, respectively), $F_n$ transforms the device dependent input colors R,G,B into responsive device independent output colors X,Y,Z expressed in the CIEXYZ color space. In summary, $F_n$ transforms device-dependent colors R,G,B into responsive device-independent colors X,Y,Z. Other device-independent color spaces such as CIELAB can be used.

The reference display forward transform $F_n$ of a reference display device $D_n$ can include a transfer function for the color channels, such as the change of offset, gain, or type of non-linear behavior. A non-linear behavior is often described by an exponential function, the exponent being called gamma. $F_n$ may include the balance of primary colors of the reference display device $D_n$. This can be carried out by a linear matrix applied to the color channels of the video color signal. Such a linear matrix recomposes each color channel by a linear combination of all color channels. By this balancing operation, the video color signal can be adapted to the primary colors of the reference display device $D_n$. When the linear matrix is diagonal, this operation is called white balancing and corresponds to a combined modification of gains of the color channels. White balancing modifies the hue and brightness of white on the reference display device. White is understood to be the reproduced color on the reference display when all color channels have their maximum value.

When simple offset, gain, gamma and matrix based operation are not sufficient to specify the color reproduction of a reference display device, a three-dimensional (3D) look up table (LUT) can be used. Assuming three color channels, color can be represented in a three-dimensional (3D) color space. A 3D LUT is a 3D table of colors. Indexed by an incoming color (defined by 3 coordinates), the 3D LUT gives an output color for each input color. For practical reasons of memory capacity and execution time, a 3D LUT does not have entries for all possible input colors but is a sub-sampled representation of the color reproduction. A one-dimensional (1 D) LUT can be used to define the transfer function of a color channel.

One known way to specify the color reproduction of a display device is the so-called ICC profile of the International Color Consortium (ICC) such as defined in the specification ICC.1:2004-10 (Profile version 4.2.0.0) entitled "Image technology colour management - Architecture, profile format, and data structure".

The ICC profile allows referring device-dependent display input colors to a Profile Connection Space (PCS).

The PCS is intended to enable the user of ICC profiles to determine or compensate colors differences. Among the types of profiles, we choose the display profile in this implementation. The profile can include :

- 1D curves or LUTs;
- Linear matrices:
- Regular N-to-M LUTs, up to 2563 entries, 8 or 16 bit precision;
- Black and white point of the display;
- For emitting displays: Luminance level [Cd/m2];
- Viewing condition;
- Illuminant and surround XYZ [Cd/m2];
- Device technology.

However, ICC profile PCS is based on CIE 1931 XYZ color space (or CIELAB derived from it). The following known limitations of XYZ are inherent in ICC profiles:

- Viewing field of 2 degrees
- Photopic human vision
- Limited to the metamerism of a small group of human observers

In this embodiment, the reference display forward transform $F_n$ of a reference display device $D_n$ is described by an ICC profile. For the ICC profile, the following parameters are chosen:

The rendering intent is chosen to be the media-relative colorimetric rendering intent. The media white point (ICC mediaWhitePointTag) is set to D60.
- The ICC Profile Connection Space (PCS) defines the color space used for the device independent colors. ICC profiles allow for CIEXYZ and CIELAB space. In this embodiment, if not otherwise mentioned, CIEXYZ color space is used.
The profile type is a display profile containing reference display forward transforms for perceptual and colorimetric rendering intent (AToB0Tag and AtoB1Tag tags, respectively) as well as reference display inverse transforms for perceptual and colorimetric rendering intent (BToA0Tag and BtoA1Tag tags, respectively).
- Each reference display reproduction transform can be realized either by a LUT with 3x8 bit LUT entries (ICC lut8Type structure), 3x16 bit LUT entries (ICC lut16Type structure) or a combination of 3D LUT, 1D LUTs, linear matrix or/and parametric transfer functions (ICC lutAtoBType structure). However, in this embodiment we use 3x16 bit LUT entries (ICC lut16Type structure).

The ICC profile for the reference display device $D_n$ contains thus the corresponding reference display forward transform $F_n$ and its inverse $I_n$, the reference display inverse transform. The profile of each reference display device $D_n$ is calculated as follows according to well known methods:

1. For a first set of device dependent colors $\{R_i, G_i, B_i / i = 0...I - 1\}$, a first set of responsive, device independent colors $\{X_i, Y_i, Z_i / i = 0...I - 1\}$ are measured.
2. In order to determine the reference display forward transform $F_n$, the elements of the lut16Type structure of the ICC AtoB1Tag tag are calculated as follows:

a. A set $\{R_m, G_m, B_m / m=0...M-1\}$ of device dependent colors is defined, distributed regularly in the device dependent color space RGB according to ICC specification;
b. A set $\{X_m, Y_m, Z_m / m=0...M-1\}$ of device independent colors is defined according to the equation $(X_m, Y_m, Z_m) = V(R_m, G_m, B_m, \{R_i, G_i, B_i, X_i, Y_i, Z_i / i=0...I-1\})$ with $V()$ being an interpolation method that calculates $(X_m, Y_m, Z_m)$ by interpolation from $\{X_i, Y_i, Z_i / i=0...I-1\}$ taking into account the relation of $(R_m, G_m, B_m)$ to $\{R_i, G_i, B_i / i=0...I-1\}$. Interpolation is well known, and in this case linear interpolation or splines-based interpolation can be used.

3. In order to determine the reference display inverse transform $I_n$, the elements of the lut16Type structure of the ICC BtoA1Tag tag are calculated from $\{R_i, G_i, B_i, X_i, Y_i, Z_i / i=0...I-1\}$ in a similar way as described for $F_n$ but inverting the direction of interpolation. Since forward transform and inverse transform of the same the reference display device are both determined by interpolation, the concatenation of inverse and forward transform will not give a neutral operation.

The entries of ICC lut16Type LUTs represent values in the range 0,0 to 1,0, encoded as 16 bit integers. These entries should be divided by 65535,0 for the calculation of the actual transform output colors.

Other tags of the ICC profile could be used. For example, the document US2006-250623 discloses a method for creation of parametric transform based profiles from mentioned measurements.

## 2 - Definition of creative color transforms.

A classical step of post-production is color correction. If color correction concerns the global colors of an image, it is called primary color correction. If it concerns single objects in an image or along a series of images, it is called window color correction. Color correction for creative intent includes the change of hue, saturation and brightness of the image on the reference display. It includes the modification of amplitudes of so-called primary colors. Therefore, color correction includes the modification of the transfer function of the color channels, the balancing of primary colors, and simple white balancing.

When color correction concerns specific colors, transfer functions or matrices are not sufficient. A director of photography may want for example to desaturate the dark blue of an image while keeping lighter blues, dark greens and dark cyans unchanged. Assuming three color channels, the creative correction of specific colors corresponds to a change of colors in a local region of the 3D color space. Therefore, this creative operation is often called local color correction. Local color correction can be described by a sophisticated 3D parametric function defining the modification of the three color channels. Another way is to describe local color correction by a 3D LUT. For practical reasons of memory capacity and execution time, a 3D LUT does not have entries for all possible combinations of three input colors but is a sub-sampled representation of the local color correction operation.

The creative color correction can include one or more of the above described operations or/and other operations in various order. For example, a first creative color correction step may consist in a gamma-based transfer function for all three color channels, then a linear matrix based balance is carried out, followed by a 3D LUT and finally again a non-linear transfer function for each color channel.

In a special case, the director of photography may want to change the color of a deep blue object in an image while keeping the same or a similar deep blue of another object. This can only achieved by window color correction. For a single image, two different color correction operations are carried out depending on the position in the image (first or second object). This case is treated separately in this embodiment of the invention and is not considered if not mentioned.

Since the reference display devices have different characteristics with respect to black level, white level, color gamut and overall behavior of their color reproduction transform, creative color correction has to be carried out for each reference display device. The creative color transform $C_n$ for the reference display device $D_n$ is meant to carry out the creative color correction. This creative color transform contains thus artistic color decisions and can not be derived automatically. The creative color correction is one strong element of the artwork and an aim of this invention is to preserve the color decisions until the reproduction on a consumer display device. The creative color correction may change from image to image or from shot to shot. If not mentioned specifically, a single creative transform valid at a single instant of time will be handled in the following.

In order to generate the creative color transform $C_n$ for the reference display device $D_n$, the following known steps are carried out:

1. An image server delivers the color signal of a current image to a dedicated color correction equipment that is connected to the reference display device $D_n$;
2. The director of photography and the colorist decide about the colors for the current image and set the color correction parameters of the dedicated color correction equipment;
3. A first set of device dependent colors $\{R_k, G_k, B_k / k = 0...K\text{-}1\}$ is input to the dedicated color correction equipment, for example using a specific test image or a color signal generator;
4. A first set of device dependent, responsive colors $\{R_k', G_k', B_k' / k=0...K\text{-}1\}$ is measured at the output of the dedicated color correction equipment;
5. The creative color transform $C_n$ is defined by a 3D LUT using $\{R_k, G_k, B_k / k=0...K\text{-}1\}$ as input and $\{R_k', G_k', B_k' / k=0...K\text{-}1\}$ as output colors.

## 3 - Concatenation of the reference display-device forward transforms with the creative color transforms to get a set of reference display forward transforms, i.e. final transforms.

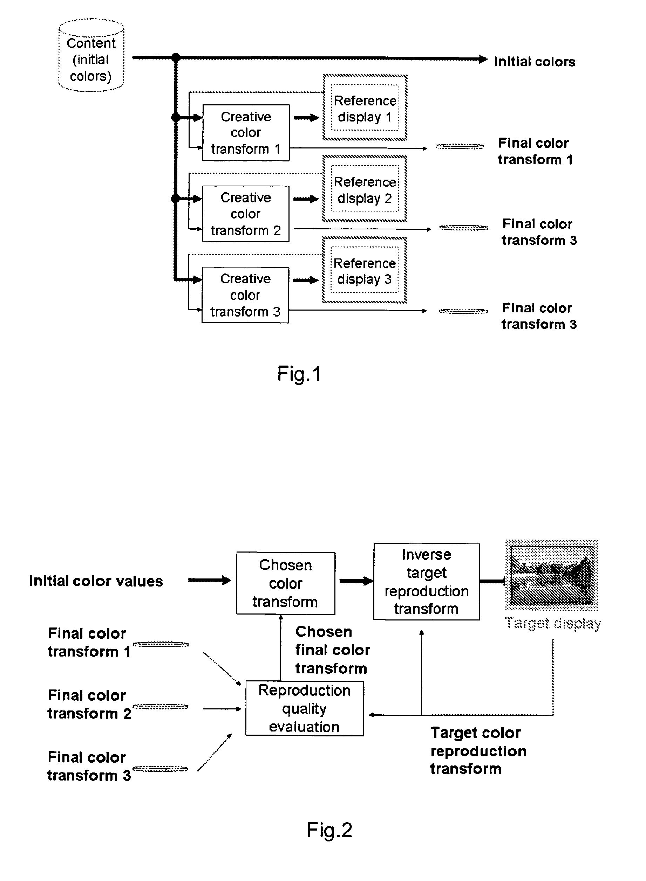

In reference to figure 1, for each reference display $D_n$, a creative color transform $C_n$ and the reference display-device forward transform $F_n$ are concatenated to a so-called reference display forward transform $T_n$, or "final transform", that is adapted to transform any device dependent input colors, notably the source colors of the images to reproduce, into responsive device independent output colors.

The final transform $T_n$ is represented as a LUT-based ICC profile using the AtoB1Tag tag and the lut16Type structure. As LUT input values, the device dependent input colors $\{R_k, G_k, B_k / k=0...K-1\}$ of the creative transform $C_n$ are used. The LUT output colors are calculated by the following two steps: First, the set of already defined device dependent, responsive output colors $\{R_k', G_k', B_k' / k=0...K-1\}$ of the creative transform $C_n$ is input to the reference display-device forward transform $F_n$. Second, the set of responsive, device independent, final output colors $\{X_k', Y_k', Z_k' / k=0...K-1\}$ are calculated using the already introduced lut16Type structure of the AtoB1Tag tag of $F_n$ and a state of the art interpolation method $W()$ according to $(X_k', Y_k', Z_k')=W(R_k', G_k', B_k', \{R_m, G_m, B_i, X_m, Y_m, Z_m / m=0...M-1\})$, for example tetrahedral interpolation.

All final transforms $\{T_n / n=1...N\}$ are transmitted to a target display device as metadata with the video data representing the source images to display.

In the above mentioned special case of window color correction, we may have more that one final transform per reference display device. This special case is possible but not further described in this embodiment. In the above mentioned case that the color corrections changes in time, the transforms $\{T_n / n=1...N\}$ are valid only for a specific period of time.

### 4 - Definition of the target display device used to reproduce sources images.

In order to select one of the final color transforms $\{T_n / n=1...N\}$, the characteristics of the target display device used to display images have to be known. As for the reference display devices, an ICC profile is used for this purpose. The ICC profile of the target display device contains the target reproduction forward transform $F_{TARGET}$ and its inverse $I_{TARGET}$. The target reproduction forward transform $F_{TARGET}$ is adapted to transform the device dependent input colors R,G,B into responsive device independent output colors X,Y,Z. $F_{TARGET}$ and $I_{TARGET}$ are calculated is a similar manner as described above for the reference display devices. The knowledge about the characteristics of the target display device is essential, since the final color transform is selected such that the reproduction quality of the source colors is best on the given target display device. When using a second target display device of other characteristics than a first target display device, it can be possible that different final color transforms are selected for the first and second target display devices.

For selecting one of the final color transforms $\{T_n / n=1...N\}$, i.e. one of the reference display forward transforms, two methods of selection are described using two different ways of how reproduction quality is evaluated based on the preservation of characteristics of transformed test colors with respect to reproduced test colors.

### 5 - Selection of the best reference display forward transforms or "final" transforms for calibration of the target display device.

The following described selection methods use a device-dependent RGB color space with 10bit bit depth per color channel.

### 5.1 - 1st method of selection of the best final color transform.

One method of selection of one of the final color transforms $\{T_n / n=1...N\}$ that is the best suited to transform source colors in order to get the reproduction of source images with the best quality is based on the calculation of a mean reproduction error. In the following, a possible implementation of this method is described. The implementation comprises the following steps:

1. A first set of device-dependent source test colors is chosen on a regular DxDxD grid in the RGB color space according to: $\left\{ R^T, G^T, B^T; R^T = \dfrac{d}{D}2^{10}; G^T = \dfrac{e}{D}2^{10}; B^T = \dfrac{f}{D}2^{10}; 0 \le d, e, f < D; D < 2^{10} \right\}$; such a selection is considered as representative of the device-dependent source colors that represent images to display;

2. For each device-dependent source test color $(R^T, G^T, B^T)$ of this set and for each final color transform $T_n$ associated to a reference display device $D_n$, a device-independent reference test color $\left( X_n^T, Y_n^T, Z_n^T \right) = T_n \left( R^T, G^T, B^T \right)$ is calculated;

3. Each mapped device-independent reference test color is transformed by the target reproduction inverse transform $I_{TARGET}$ into a device-dependent target test color according to $\left( R_n^{T'}, G_n^{T'}, B_n^{T'} \right) = I_{TARGET} \left( X_n^T, Y_n^T, Z_n^T \right)$. This target reproduction inverse transform generally involves also a preliminary mapping of the device-independent reference test color into the color gamut of the target display device using known gamut mapping or tone mapping algorithms, resulting in a mapped device-independent reference test color $\left(X_n^{T\,\prime},Y_n^{T\,\prime},Z_n^{T\,\prime}\right)$.

4. Each device-dependent target test color $\left(R_n^{T\,\prime},G_n^{T\,\prime},B_n^{T\,\prime}\right)$ is transformed by the target reproduction forward transform F$_{TARGET}$ into a device-independent target test color according to

$$\left(X_n^{T\,\prime\prime},Y_n^{T\,\prime\prime},Z_n^{T\,\prime\prime}\right)= F_{TARGET}\left(R_n^{T\,\prime},G_n^{T\,\prime},B_n^{T\,\prime}\right);$$

5. For each final color transform $T_n$, a mean reproduction error is calculated between the device-independent target test colors $\left(X_n^{T\,\prime\prime},Y_n^{T\,\prime\prime},Z_n^{T\,\prime\prime}\right)$ and their corresponding device-independent reference test colors $\left(X_n^{T},Y_n^{T},Z_n^{T}\right)$ according to the formula : $\Delta E_n = \dfrac{1}{D^3}\sum\left\|\left(L_n^{T\,\prime\prime},a_n^{T\,\prime\prime},b_n^{T\,\prime\prime}\right)-\left(L_n^{T},a_n^{T},b_n^{T}\right)\right\|$ where

$\left(L_n^{T},a_n^{T},b_n^{T}\right)$ and $\left(L_n^{T\,\prime\prime},a_n^{T\,\prime\prime},b_n^{T\,\prime\prime}\right)$ in CIELAB color space correspond to $\left(X_n^{T},Y_n^{T},Z_n^{T}\right)$ and $\left(X_n^{T\,\prime\prime},Y_n^{T\,\prime\prime},Z_n^{T\,\prime\prime}\right)$ in the CIEXYZ color space, respectively; as a whole, a difference is then evaluated between each set of device-independent reference test colors $\left(X_n^{T},Y_n^{T},Z_n^{T}\right)$ and the corresponding set of device-independent target test colors $\left(X_n^{T\,\prime\prime},Y_n^{T\,\prime\prime},Z_n^{T\,\prime\prime}\right)$;

6. For each final color transform $T_n$, a reproduction quality index $Q_n$ is defined as the inverse of the mean reproduction error according to the formula:

$$Q_n = \frac{1}{\Delta E_n} ;$$

7. The final color transform $T_{optim}$ with highest reproduction quality index, i.e. with the lowest above-quoted difference, is selected to transform the source colors for their reproduction by the target display device as explained in paragraph 6 below.

**5.2 - 2nd method of selection of the best final color transform.**

Another method of selection of one of the final color transforms $\{T_n/n=1...N\}$ that is the best suited to transform source colors in order to get the reproduction of source images with the best quality is based on the preservation of color distances. In the following, a possible implementation of this method is described. The implementation uses a device-dependent RGB color space with 10bit bit depth per color channel. The implementation comprises the following steps:

1. A first set of device-dependent source test colors is chosen on a first regular DxDxD grid in RGB color space according to:

$$\left\{R^{T1},G^{T1},B^{T1};R^{T1}=\frac{d}{D}2^{10};G^{T1}=\frac{e}{D}2^{10};B^{T1}=\frac{f}{D}2^{10} \quad / \quad 0\le d,e,f<D;\right\}$$

with $D<2^{10}$ ; such a selection is considered as representative of the device-dependent source colors that represent images to display;
2. A second set of device-dependent source test colors is chosen on a second regular DxDxD grid that is shifted in RGB color space with respect to the mentioned first grid according to:

$$\left\{ R^{T2} = R^{T1} + \frac{2^{10}}{2D} ; G^{T2} = G^{T1} + \frac{2^{10}}{2D} ; B^{T2} = B^{T1} + \frac{2^{10}}{2D} \right\} ;$$

3. For each device-dependent source test color ($R^{T1}, G^{T1}, B^{T1}$) of the first set and for each device-dependent source test color ($R^{T2}, G^{T2}, B^{T2}$) of the second set, and for each final color transform $T_n$, device-independent reference test colors $\left( X_n^{T1}, Y_n^{T1}, Z_n^{T1} \right) = T_n \left( R^{T1}, G^{T1}, B^{T1} \right)$ and $\left( X_n^{T2}, Y_n^{T2}, Z_n^{T2} \right) = T_n \left( R^{T2}, G^{T2}, B^{T2} \right)$ are calculated, respectively, then providing a first set of device-independent reference test colors and a second set of device-independent reference test colors;

4. Each device-independent reference test color is transformed by the by the target reproduction inverse transform $I_{TARGET}$ into a device-dependent target test color according to $\left( R_n^{T1'}, G_n^{T1'}, B_n^{T1'} \right) = I_{TARGET} \left( X_n^{T1}, Y_n^{T1}, Z_n^{T1} \right)$ and to $\left( R_n^{T2'}, G_n^{T2'}, B_n^{T2'} \right) = I_{TARGET} \left( X_n^{T2}, Y_n^{T2}, Z_n^{T2} \right)$, respectively. This target reproduction inverse transform generally involves also a preliminary mapping of the device-independent reference test color into the color gamut of the target display device using known gamut mapping or tone mapping algorithms, resulting in a mapped device-independent reference test colors $\left( X_n^{T1'}, Y_n^{T1'}, Z_n^{T1'} \right)$ and $\left( X_n^{T2'}, Y_n^{T2'}, Z_n^{T2'} \right)$, respectively;

5. Each device-dependent target test color is transformed by the target reproduction forward transform $F_{TARGET}$ into a device-independent target test color according to $\left( X_n^{T1''}, Y_n^{T1''}, Z_n^{T1''} \right) = F_{TARGET} \left( R_n^{T1'}, G_n^{T1'}, B_n^{T1'} \right)$ and to $\left( X_n^{T2''}, Y_n^{T2''}, Z_n^{T2''} \right) = F_{TARGET} \left( R_n^{T2'}, G_n^{T2'}, B_n^{T2'} \right)$, respectively, then providing a first set of device-independent target test colors and a second set of device-independent target test colors;

6. For all pairs of device-independent reference test colors $\left\{ \left( X_n^{T1}, Y_n^{T1}, Z_n^{T1} \right), \left( X_n^{T2}, Y_n^{T2}, Z_n^{T2} \right) \right\}$ and for all pairs of device-independent target test colors $\left\{ \left( X_n^{T1''}, Y_n^{T1''}, Z_n^{T1''} \right), \left( X_n^{T2''}, Y_n^{T2''}, Z_n^{T2''} \right) \right\}$, distances are calculated according to $\Delta E_n^T = \left| \left( L_n^{T1}, a_n^{T1}, b_n^{T1} \right) - \left( L_n^{T2}, a_n^{T2}, b_n^{T2} \right) \right|$ and $\Delta E_n^{T''} = \left| \left( L_n^{T1''}, a_n^{T1''}, b_n^{T1''} \right) - \left( L_n^{T2''}, a_n^{T2''}, b_n^{T2''} \right) \right|$, respectively, where $\left( L_n^{T1}, a_n^{T1}, b_n^{T1} \right)$. $\left( L_n^{T2}, a_n^{T2}, b_n^{T2} \right)$, $\left( L_n^{T1''}, a_n^{T1''}, b_n^{T1''} \right)$, $\left( L_n^{T2''}, a_n^{T2''}, b_n^{T2''} \right)$ in CIELAB color space correspond to $\left( X_n^{T1}, Y_n^{T1}, Z_n^{T1} \right)$, $\left( X_n^{T2}, Y_n^{T2}, Z_n^{T2} \right)$, $\left( X_n^{T1''}, Y_n^{T1''}, Z_n^{T1''} \right)$ and $\left( X_n^{T2''}, Y_n^{T2''}, Z_n^{T2''} \right)$ in CIEXYZ color space, respectively; as a whole, a difference is then evaluated between first and second set of device-independent reference test colors $\left( X_n^T, Y_n^T, Z_n^T \right)$ and between first and second corresponding set of device-independent target test colors $\left( X_n^{T''}, Y_n^{T''}, Z_n^{T''} \right)$;

7. For each final color transform $T_n$, the mean change of distances is calculated according to the formula :

$$\Delta E_n = \frac{1}{D^3} \sum \left| \Delta E_n^T - \Delta E_n^{T''} \right| ;$$

8. For each final color transform $T_n$, a reproduction quality index $Q_n$ is defined as the inverse of the mean change of distances according to $Q_n = \dfrac{1}{\Delta E_n}$ ;

9. The final color transform $T_{optim}$ with highest reproduction quality index, i.e. with the lowest above-mentioned difference, is selected to transform the source colors for their reproduction by the target display device as explained in the following paragraph 6.

**6 - Display of sources images using the target display device calibrated by the selected final color transform.**

Together with the final color transforms $\{T_n/n=1...N\}$, the target display device receives a video signal containing RGB source colors corresponding to video source images to display. In order to display these source images, the target display device applies the following steps:

1. To select one $T_{optim}$ of the final color transforms (see above);
2. To apply the selected final color transform $T_{optim}$ to the source colors representing the images to display, resulting in calibrated device-independent colors;
3. To apply the target reproduction inverse transform $I_{TARGET}$ to the transformed device-independent colors resulting in calibrated device-dependent colors;
4. to input the calibrated device-dependent colors into the target display device in order to reproduce the images represented by the source colors.

The whole reproduction method as described above is synthesized schematically on figure 2.
Thanks to the invention, any target color reproduction device can be easily calibrated without using any information about the source color space in which source colors are expressed, and, moreover, a good compensation for reproduction errors can be obtained.
The invention as exemplified by the above described embodiment brings also the following advantages :

-    color content can be created for, transmitted to and reproduced by display devices with different color characteristics;
-    the same color content can be reproduced with different target display devices with little increase of transmission data rate ; the transmission of the reference reproduction forward transforms requires only little increase of transmission data rate;
-    no transmission of source gamut is required, contrary to the method disclosed in the document WO2007/078563;
-    Color reproduction is optimized for all colors on the different display devices.

While the present invention is described with respect to a main embodiments, it is understood that the present invention is not limited to this embodiment, and that various changes and modifications may be effected therein by one of ordinary skill in the pertinent art within the scope of the appended claims. The present invention as claimed therefore includes variations from this main embodiment described herein, as will be apparent to one of skill in the art. It is to be understood that the invention may be implemented in various forms of hardware, software, firmware, special purpose processors, or combinations thereof.

**Claims**

**1.**    Method to reproduce at least one source image represented by device-dependent source colors using :

- a target color reproduction device **characterized :**
- **by** its target reproduction forward transform $F_{TARGET}$, adapted to transform device-dependent colors into responsive device-independent colors for said target reproduction device, and/or
- **by** its target reproduction inverse transform $I_{TARGET}$, adapted to transform device-independent colors into device-dependent colors, wherein said device-independent colors are responsive to said device-dependent colors for said target reproduction device,
- a set of reference reproduction forward transforms $\{T_n/n=1...N\}$, each adapted to transform device-dependent colors into corresponding device-independent colors,
said method comprising the following steps :

Step 1- selecting a set of device-dependent source test colors $(R^T, G^T, B^T)$ among said device-dependent source colors,

Step 2- for each reference reproduction forward transform $T_n$ of the set $\{T_n/n = 1...N\}$:

Step 2.1) transforming said set of device-dependent source test colors $(R^T, G^T, B^T)$ into a set of device-independent reference test colors $\left(X_n^T, Y_n^T, Z_n^T\right) = T_n\left(R^T, G^T, B^T\right)$, using said reference reproduction forward transform $T_n$,

Step 2.2) transforming said set of device-independent reference test colors into a set of device-dependent target test colors $\left(R_n^{T\,\prime}, G_n^{T\,\prime}, B_{n.}^{T\,\prime}\right) = I_{TARGET}\left(X_n^T, Y_n^T, Z_n^T\right)$ using either an inverse of said target reproduction forward transform, or said target reproduction inverse transform $I_{TARGET}$,

Step 2.3) either transforming said set of device-dependent target test colors $\left(R_n^{T\,\prime}, G_n^{T\,\prime}, B_n^{T\,\prime}\right)$ into a corresponding set of device-independent target test colors

$$\left(X_n^{T\,\prime\prime}, Y_n^{T\,\prime\prime}, Z_n^{T\,\prime\prime}\right) = F_{TARGET}\left(R_n^{T\,\prime}, G_n^{T\,\prime}, B_n^{T\,\prime}\right)$$ using said target reproduction forward transform, or controlling said target color reproduction device using said set of device-dependent target test colors in order to reproduce said set and measuring said set as reproduced to obtain a corresponding set of device-independent target test colors,

Step 3- evaluating a difference $\Delta E_n = \dfrac{1}{D^3}\sum\left\|\left(L_n^{T\,\prime\prime}, a_n^{T\,\prime\prime}, b_n^{T\,\prime\prime}\right) - \left(L_n^T, a_n^T, b_n^T\right)\right\|$ between each set of device-independent reference test colors and the corresponding set of device-independent target test colors,

Step 4- selecting the reference reproduction forward transform $T_{optim}$ that has been used to obtain the set of device-independent reference test colors corresponding to the lowest of the evaluated differences,

Step 5- transforming the device-dependent source colors into device-independent calibrated colors using said selected reference reproduction forward transform $T_{optim}$,

Step 6- transforming said device-independent calibrated colors into device-dependent calibrated colors using either said inverse of said target reproduction forward transform, or said target reproduction inverse transform $I_{TARGET}$,

Step 7- reproducing said at least one source image by controlling said target color reproduction device using said device-dependent calibrated colors.

2. Method of reproduction according to claim 1, **characterized in that** said selection of device-dependent source test colors among said device-dependent source colors is adapted to get a set of device-dependent source test colors that are representative of said device-dependent source colors.

3. Method of reproduction according to any one of claims 1 to 2, using also :

- a set of reference color reproduction devices, each **characterized by** a reference reproduction-device forward transform adapted to transform device-dependent colors into responsive device-independent colors for said reference reproduction device,
- attached to each reference reproduction device, a creative color transform adapted to transform device-dependent source colors into device-dependent intermediate colors such that, when said device-dependent intermediate colors are used to control said reference reproduction device, at least one of those colors is different in at least one of the following aspects: hue, saturation, luminance, color gamut or dynamic range,

**characterized in that** each reference reproduction forward transform of said set is defined by the concatenation of a reference reproduction-device forward transform characterizing a reference color reproduction device of said set and of a creative color transform of said set attached to said reference reproduction device.

4. System of reproduction of at least one image comprising :

- a calibration module adapted to implement the method of reproduction according to any one of claims 1 to 3 using said target color reproduction device, comprising a receiver that is adapted to receive said source colors representing the at least one image to reproduce with said set of reference reproduction forward transforms

$\{T_n/n = 1...N\}$, and
- said target color reproduction device.

## Patentansprüche

1. Verfahren zum Wiedergeben mindestens eines Quellbilds, das durch vorrichtungsabhängige Quellfarben repräsentiert ist, unter Verwerdung:

    - einer Ziel-Farbwiedergabevorrichtung, die **gekennzeichnet ist durch**:
    - ihre Ziel-Wiedergabe-Vorwärtstransformation $F_{TARGET}$, die zum Transformieren vorrichtungsabhängiger Farben in darauf ansprechende vorrichtungsunabhängige Farben für die Ziel-Wiedergabevorrichtung ausgelegt ist, und/oder
    - ihre Ziel-Wiedergabe-Rücktransformation $I_{TARGET}$, die zum Transformieren vorrichtungsunabhängiger Farben in vorrichtungsabhängige Farben ausgelegt ist, wobei die vorrichtungsunabhängigen Farben auf die vorrichtungsabhängigen Farben für die Ziel-Wiedergabevorrichtung ansprechen,
    - eine Menge von Referenz-Wiedergabe-Vorwärtstransformationen $\{T_n/n = 1...N\}$, wobei jede zum Transformieren vorrichtungsabhängiger Farben in entsprechende vorrichtungsunabhängige Farben ausgelegt ist,
    - wobei das Verfahren die folgenden Schritte umfasst:

        Schritt 1 - Auszählen einer Menge vorrichtungsabhängiger Quelltestfarben ($R^T$, $G^T$, $B^T$) unter den vorrichtungsabhängigen Quellfarben,
        Schritt 2 - für jede Referenz-Wiedergabe-Vorwärtstransformation $T_n$ der Menge $\{T_n/n = 1...N\}$:

            Schritt 2.1) Transformieren der Menge vorrichtungsabhängiger Quelltestfarben ($R^T$, $G^T$, $B^T$) in eine Menge vorrichtungsunabhängiger Referenztestfarben $\left(X_n^T, \; Y_n^T, \; Z_n^T\right) = T_n\left(R^T, \; G^T, \; B^T\right)$ unter Verwendung der Referenz-Wiedergabe-Vorwärtstransformation $T_n$,

            Schritt 2.2) Transformieren der Menge vorrichtungsunabhängiger Referenztestfarben in eine Menge vorrichtungsabhängiger Zieltestfarben $\left(R_n^{T\prime}, \; G_n^{T\prime}, \; B_n^{T\prime}\right) = I_{TARGET}\left(X_n^T, \; Y_n^T, \; Z_n^T\right)$ unter Verwendung einer Inversen der Ziel-Wiedergabe-Vorwärtstransformation oder der Ziel-Wiedergabe-Rücktransformation $I_{TARGET}$,

            Schritt 2.3) entweder Transformieren der Menge vorrichtungsabhängiger Zieltestfarben $\left(R_n^{T\prime}, \; G_n^{T\prime}, \; B_n^{T\prime}\right)$ in eine entsprechende Menge vorrichtungsunabhängiger Zieltestfarben $\left(X_n^{T\prime\prime}, \; Y_n^{T\prime\prime}, \; Z_n^{T\prime\prime}\right) = F_{TARGET}\left(R_n^{T\prime}, \; G_n^{T\prime}, \; B_n^{T\prime}\right)$ unter Verwendung der Ziel-Wiedergabe-Vorwärtstransformation oder Steuern der Ziel-Farbwiedergabevorrichtung unter Verwendung der Menge vorrichtungsabhängiger Zieltestfarben, um die Menge wiederzugeben, und Messen der wie wiedergegebenen Menge, um eine entsprechende Menge vorrichtungsunabhängiger Zieltestfarben zu erhalten,

        Schritt 3 - Berechnen einer Differenz $\Delta E_n = \dfrac{1}{D^3} \sum \left\| \left(L_n^{T\prime\prime}, \; a_n^{T\prime\prime}, \; b_n^{T\prime\prime}\right) - \left(L_n^T, \; a_n^T, \; b_n^T\right) \right\|$ zwischen jeder Menge vorrichtungsunabhängiger Referenztestfarben und der entsprechenden Menge vorrichtungsunabhängiger Zieltestfarben,
        Schritt 4 - Auszählen der Referenz-Wiedergabe-Vorwärtstransformation $T_{optim}$, die zum Erhalten der Menge vorrichtungsunabhängiger Referenztestfarben, die der niedrigsten der berechneten Differenzen entspricht, verwendet worden ist,
        Schritt 5 - Transformieren der vorrichtungsabhängigen Quellfarben in vorrichtungsunabhängige kalibrierte Farben unter Verwendung der ausgewählten Referenz-Wiedergabe-Vorwärtstransformation $T_{optim}$,
        Schritt 6 - Transformieren der vorrichtungsunabhängigen kalibrierten Farben in vorrichtungsabhängige kalibrierte Farben entweder unter Verwendung der Inversen der Ziel-Wiedergabe-Vorwärtstransformation oder der Ziel-Wiedergabe-Rücktransformation $I_{TARGET}$,

Schritt 7 - Wiedergeben des mindestens einen Quellbilds durch Steuern der Ziel-Farbwiedergabevorrichtung unter Verwendung der vorrichtungsabhängigen kalibrierten Farben.

2. Verfahren zum Wiedergeben nach Anspruch 1, **dadurch gekennzeichnet, dass** die Auswahl vorrichtungsabhängiger Quelltestfarben unter den vorrichtungsabhängigen Quellfarben so ausgelegt ist, dass eine Menge vorrichtungsabhängiger Quelltestfarben erhalten werden, die repräsentativ für die vorrichtungsabhängigen Quellfarben sind.

3. Verfahren zum Wiedergeben nach einem der Ansprüche 1 bis 2, außerdem unter Verwerdung:

   - einer Menge von Referenz-Farbwiedergabevorrichtungen, wobei jede durch eine Referenz-Wiedergabevorrichtungs-Vorwärtstransformation charakterisiert ist, die zum Transformieren vorrichtungsabhängiger Farben in darauf ansprechende vorrichtungsunabhängige Farben für die Referenz-Wiedergabevorrichtung ausgelegt ist,
   - an jeder Referenz-Wiedergabevorrichtung eine kreative Farbtransformation angebracht ist, die dafür ausgelegt ist, vorrichtungsabhängige Quellfarben in der Weise in vorrichtungsabhängige zwischenfarben zu transformieren, dass, wenn die vorrichtungsabhängigen Zwischenfarben zum Steuern der Referenz-Wiedergabevorrichtung verwendet werden, mindestens eine dieser Farben in Bezug auf mindestens einen der folgenden Aspekte anders ist: Farbton, Sättigung, Farbdichte, Farbpalette oder Dynamikbereich, **dadurch gekennzeichnet, dass** jede Referenz-Wiedergabe-Vorwärtstransformation der Menge durch die Verkettung einer Referenz-Wiedergabevorrichtungs-Vorwärtstransformation, die eine Referenz-Farbwiedergabevorrichtung der Menge charakterisiert, und einer kreativen Farbtransformation der Menge, die an der Referenz-Wiedergabevorrichtung angebracht ist, definiert ist.

4. System zur Wiedergabe mindestens eines Bilds, wobei das System umfasst:

   - ein Kalibrierungsmodul, das zum Implementieren des Verfahrens zur Wiedergabe nach einem der Ansprüche 1 bis 3 unter Verwendung der Ziel-Farbwiedergabevorrichtung ausgelegt ist, das einen Empfänger umfasst, der zum Empfangen der Quellfarben ausgelegt ist, die das mindestens eine mit der Menge von Referenz-Wiedergabe-Vorwärtstransformationen $\{T_n/n{=}1...N\}$ wiederzugebende Bild repräsentieren, und
   - die Zielfarbwiedergabevorrichtung.

## Revendications

1. Procédé permettant la reproduction d'au moins une image source représentée par des couleurs sources dépendantes d'un dispositif qui utilise :

   - un dispositif de reproduction couleur cible **caractérisé :**
   - **par** sa transformée vers l'aval de reproduction cible $F_{CIBLE}$ adaptée pour transformer des couleurs dépendantes d'un dispositif en couleurs réagissantes indépendantes du dispositif pour ledit dispositif cible de reproduction, et/ou
   - par sa transformée vers l'amont de reproduction cible $I_{CIBLE}$, adaptée pour transformer des couleurs indépendantes du dispositif en couleurs dépendantes du dispositif, où lesdites couleurs indépendantes du dispositif réagissent auxdites couleurs dépendantes du dispositif pour ledit dispositif de reproduction cible,
   - un ensemble de transformées vers l'aval de reproduction de référence $\{T_n/n{=}1...N\}$, chacune étant adaptée pour transformer des couleurs dépendantes du dispositif en couleurs correspondantes indépendantes du dispositif,

   ledit procédé comprenant les étapes suivantes :

   Étape 1 : sélection d'un ensemble de couleurs d'essai sources dépendantes du dispositif $(R^T, G^T, B^T)$ parmi lesdites couleurs sources dépendantes du dispositif, Étape 2 : pour chaque transformée vers l'aval de reproduction de référence $T_n$ de l'ensemble $\{T_n/n{=}1...N\}$ :

   Étape 2.1) transformation dudit ensemble de couleurs d'essai sources dépendantes du dispositif $(R^T, G^T, B^T)$ en un ensemble de couleurs d'essai de référence indépendantes du dispositif

$$\left(X_n^T, Y_n^T, Z_n^T\right) = T_n\left(R^T, G^T, B^T\right),$$ à l'aide de ladite transformée vers l'aval de reproduction de référence $T_n$,

Étape 2.2) transformation dudit ensemble de couleurs d'essai de référence indépendantes du dispositif en un ensemble de couleurs d'essai cibles dépendantes du dispositif

$$\left(R_n^{T\,\prime}, G_n^{T\,\prime}, B_n^{T\,\prime}\right) = I_{CIBLE}\left(X_n^T, Y_n^T, Z_n^T\right)$$ à l'aide soit d'une transformée inverse de ladite transformée vers l'aval de reproduction cible soit de ladite transformée vers l'amont de reproduction cible $I_{CIBLE}$,

Étape 2.3) soit transformation dudit ensemble de couleurs d'essai dépendantes du dispositif cible $\left(R_n^{T\,\prime}, G_n^{T\,\prime}, B_n^{T\,\prime}\right)$ en un ensemble correspondant de couleurs d'essai indépendantes du dispositif cible

$$\left(X_n^{T\,\prime\prime}, Y_n^{T\,\prime\prime}, Z_n^{T\,\prime\prime}\right) = F_{CIBLE}\left(R_n^{T\,\prime}, G_n^{T\,\prime}, B_n^{T\,\prime}\right)$$ à l'aide de ladite transformée vers l'aval de reproduction cible, soit contrôle dudit dispositif de reproduction couleur cible à l'aide dudit ensemble de couleurs d'essai cibles dépendantes du dispositif afin de reproduire ledit ensemble et de mesurer ledit ensemble reproduit pour obtenir un ensemble correspondant de couleurs d'essai cibles indépendantes du dispositif,

Étape 3 évaluation d'une différence $\Delta E_n = \dfrac{1}{D^3} \sum \left\| \left(L_n^{T\,\prime\prime}, a_n^{T\,\prime\prime}, b_n^{T\,\prime\prime}\right) - \left(L_n^T, a_n^T, b_n^T\right) \right\|$ entre chaque ensemble de couleurs d'essai de référence indépendantes du dispositif et l'ensemble correspondant de couleurs d'essai cible indépendantes du dispositif,

Étape 4 : sélection de la transformée vers l'aval de reproduction de référence $T_{optim}$ utilisée pour obtenir l'ensemble de couleurs d'essai de référence indépendantes du dispositif correspondant à la valeur la plus faible parmi les différences évaluées,

Étape 5 transformation des couleurs sources dépendantes du dispositif en couleurs étalonnées indépendantes du dispositif à l'aide de ladite transformée vers l'aval de reproduction de référence $T_{optim}$,

Étape 6 transformation desdites couleurs étalonnées indépendantes du dispositif en couleurs étalonnées dépendantes du dispositif à l'aide soit de ladite transformée inverse de la transformée vers l'aval de reproduction cible, soit de ladite transformée vers l'amont de reproduction $I_{CIBLE}$,

Étape 7 : reproduction de ladite image source au moins en contrôlant ledit dispositif cible de reproduction couleur à l'aide desdites couleurs étalonnées dépendantes du dispositif.

2. Procédé de reproduction selon la revendication 1, **caractérisé en ce que** la sélection des couleurs d'essai sources dépendantes du dispositif parmi lesdites couleurs sources dépendantes du dispositif est adaptée pour recevoir un ensemble de couleurs d'essai sources dépendantes du dispositif représentatives desdites couleurs sources dépendantes du dispositif.

3. Procédé de reproduction selon l'une quelconque des revendications 1 à 2 utilisant également :

   - un ensemble de dispositifs de reproduction couleur de référence, chacun **caractérisé par** une transformée vers l'aval du dispositif de reproduction de référence adapté pour transformer des couleurs dépendantes du dispositif en couleurs réactives indépendantes du dispositif pour ledit dispositif de reproduction de référence,
   - en lien avec chaque dispositif de reproduction de référence, une transformée de couleur créative adaptée pour transformer des couleurs sources dépendantes du dispositif en couleurs intermédiaires dépendantes du dispositifs, telles que, lorsque lesdites couleurs intermédiaires dépendantes du dispositif sont utilisées pour contrôler ledit dispositif de reproduction de référence, une de ces couleurs au moins soit différente au regard de l'un des aspects suivants au moins : nuance, saturation, luminosité, gamme de couleur ou gamme dynamique,

   **caractérisé en ce que** chaque transformée vers l'aval de reproduction de référence dudit ensemble est définie par la concaténation d'une transformée vers l'aval d'un dispositif de reproduction de référence caractérisant un dispositif de reproduction couleur de référence dudit ensemble et d'une transformée couleur créative dudit ensemble lié audit dispositif de reproduction de référence.

4. Système de reproduction d'une image au moins comprenant :

- un module d'étalonnage adapté pour mettre en oeuvre le procédé de reproduction selon l'une quelconque des revendications 1 à 3 à l'aide dudit dispositif de reproduction couleur cible, comprenant un récepteur qui est adapté pour recevoir lesdites couleurs sources représentant au moins l'image à reproduire avec ledit ensemble de transformées vers l'aval de reproduction de référence $\{T_n/n=1...N\}$, et
- ledit dispositif de reproduction couleur cible.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0606781 A
- US 6850245 B
- EP 1239668 A
- US 2006250623 A
- WO 2007078563 A